# EUROPEAN PATENT APPLICATION

(11) **EP 2 535 678 A2**
(43) Date of publication of application: **19.12.2012**
(21) Application number: 12380031.0
(22) Date of filing: 15.06.2012
(51) Int. Cl.: F28D 7/00, F28D 7/10, F28D 21/00

(54) **Heat exchanger**

(30) Priority: 16.06.2011 ES 201130651
(71) Applicant: Cuartero Antimo, Juan Manuel, 08901 Hospitalet De Llobregat, Barcelona (ES); Cuartero Antimo, Oscar José, 08901 Hospitalet De Llobregat, Barcelona (ES)
(72) Inventor: Cuartero Antimo, Juan Manuel, 08901 Hospitalet De Llobregat, Barcelona (ES)
(74) Representative: Espiell Volart, Eduardo Maria

(57) **Abstract**

It can be adapted to thermal boiler exhausts, formed by a cylindrical body (1) with a double concentric lining (2) and (3) and, optionally, an outer enveloping lining (21), having several cylindrical tubes (19), arranged diametrically and transversally between various points of the inner lining (3), having water inlet and outlet hoses (4), a fumes inlet (5) and a non-return draught diverter (7), with its drain (16) being situated in the space between the linings (2) and (3), several "half moon" shaped obstacles (18), additionally featuring various flaps (19a) inside the tubes (19), the fumes inlet (5) optionally being in a vertical position.

## Description

The present invention relates to a heat exchanger which can be adapted to thermal boiler exhausts, whether they are gas oil, natural gas or other gasses derived from oil, biomass boilers and gas oil generators, and whose system permits the preheating of the fluid, preferably the water of a heating circuit, with the consequent energetic use, savings of fuel and NOX and CO2 emission reductions to the atmosphere, in accordance with current environmental regulations. In the rest of the description, the essential characteristics of the heat exchanger shall be detailed.

### STATE OF THE ART

There are various systems and/or devices intended for the maximum use of heat energy, and especially that which is generally lost or not used, through the exhaust tubes of boilers or similar systems.

The current, more well-known systems do not generally permit the installation of exchangers in pre-existing systems, and if they do, their configuration and design make it difficult for the maintenance and cleaning operations, as well as the elimination of condensates, to be carried out.

### OBJECT OF THE INVENTION

The heat exchanger object of the present invention resolves the aforementioned drawbacks, providing the user, as well as the installer, a manageable device to easily carry out the installation thereof, provided with various elements which permit and facilitate the inspection, cleaning and maintenance thereof, while at the same time its interior features a thermodynamic design which guarantees the maximum use of the heat dragged along by the gasses or fumes coming from the boiler or similar system, to preheat the water that, coming from said boiler, supplies the heating system of the dwelling or premises, or to preheat other fluids which must be heated for its operation in other types of systems.

### DESCRIPTION OF THE EXCHANGER

The heat exchanger object of the present invention is essentially characterized in that it consists of a cylindrical body with a double concentric lining, closed at the upper part thereof by a non-return draught diverter and at the lower part thereof by a condensate drain tray. The inner lining is preferably slightly tapered, area of the base having the greatest diameter.

The watertight space demarcated by the two concentric linings can be accessed from the exterior through several water inlet and outlet hoses, also having, at different consistent heights, several preferably "half-moon" dividers, which partially compartmentalize said watertight space. The purpose of these "half-moons" is to increase the path of the water that circulates between the two linings, remaining there for a longer period of time, in turn preventing the formation of "corner" spaces wherein temperature losses are produced. These "half-moon" dividers make the circulating water come into maximum contact with the wall of the inner lining, as well as through transversal ducts situated inside the exchanger and which shall be described below.

In the lower part of the side of the cylindrical body of the exchanger, the inlet duct for the fumes can be found, which can be coupled to the chimney of the boiler or similar system, chimney which generally has a double wall. This inlet duct for fumes passes through the two cylindrical body wall linings, solely coming in contact with the inside of said body, without any contact with the watertight space demarcated by said linings.

The array of the exchanger has a series of cylindrical ducts, situated inside its cylindrical body and which connect, generally in diametric transversal direction, the inner lining at various points and at different heights, with the aim that the water or other fluid circulating through the space demarcated by the two linings to be preheated, moves from one area to another of this space receiving, upon passing through these ducts, even more heat due to the direct contact of the fumes from the inside of the exchanger on the aforementioned ducts.

The quantity of ducts is determined by the height of the exchanger itself. Likewise, and optionally, a series of flaps whose aim shall be to increase the surface area of the heat exchanger can be arranged inside these ducts.

A characteristic of the exchanger object of this invention is the presence, at the base of the non-return draught diverter, of an oval-shaped and axially centered compartment provided with an orifice for the evacuation of the condensates coming from the exhaust chimney, coupled to the upper face of the non-return draught diverter. This non-return device permits, in addition to preventing the fumes from reversing and moving back from the exhaust chimney, the fumes to be retained inside the exchanger for a longer period of time, which will also keep the water hotter longer, even if the boiler stops operating. The fumes retained inside the exchanger will not move back towards the boiler, as they are submitted to a compression produced by the process itself.

In the operating process of the exchanger, both the CO2 and the NOX are condensed inside the exhaust chimney, flowing due to gravity until they are deposited in the oval-shaped compartment of the non-return draught diverter, going to be finally deposited, upon draining said compartment, in a lower condensate drainage tray, wherefrom it shall be channelled towards a common calcite filter.

In the configuration of the exchanger, it must be mentioned that the coupling projection of the non-return draught diverter, which lines up with the projection of identical dimensions situated in the upper part of the exchanger body, as well as the projection for the same purpose of the condensate drainage tray, which lines up with the projection of identical dimensions of the lower part of the aforementioned exchanger body, are completely smooth, the splicing or joining thereof being performed by means of quick, detachable elastic flanges, eliminating the classic and known screw and nut fastenings, which are more difficult to be put in place, especially because of the possible deformations of those projections and furthermore which are susceptible to suffering the aggressive and corrosive actions of the environment, such as humidity, heat and such like.

The different components of the exchanger, inner and outer linings, transversal ducts, preferably "half-moon" dividers and the removable upper elements (the non-return draught diverter) and lower elements (condensate drainage tray), are preferably made of stainless steel of different quality or thickness depending on the type of system or pressures to which they are submitted, given the high temperatures both of the water and the fumes, coating the array of the exchanger body with insulating material (preferably fibreglass), all of that protected by a suitable exterior cover.

As a variant of embodiment, and in a practical embodiment, the exchanger can be presented for its direct installation in a span of the exhaust chimney, as described below.

In order to complete the description of the heat exchanger object of this invention, drawings are attached wherein a practical embodiment of the aforementioned exchanger has been represented in a non-limitative example.

In said drawings,

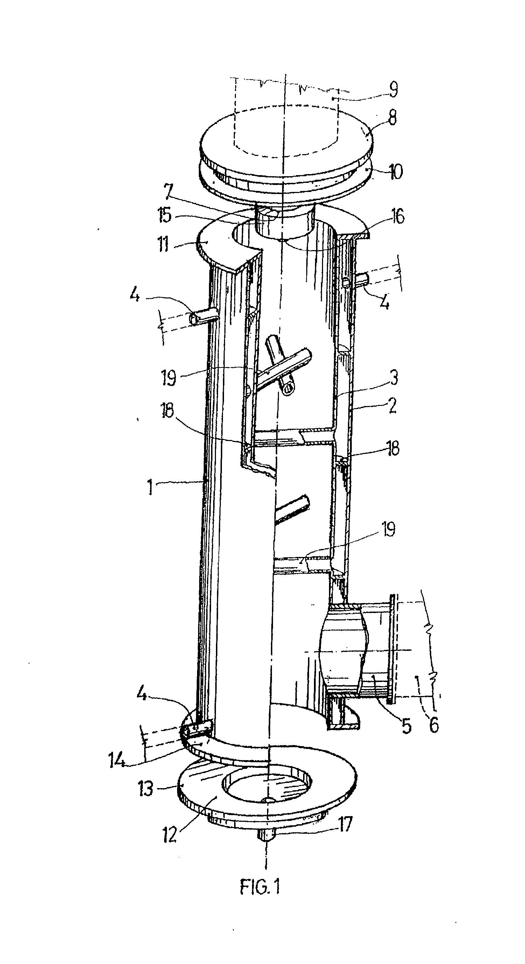

- fig. 1: is a general perspective view of the exchanger, suitably cross-sectioned to show the various elements which compose it;

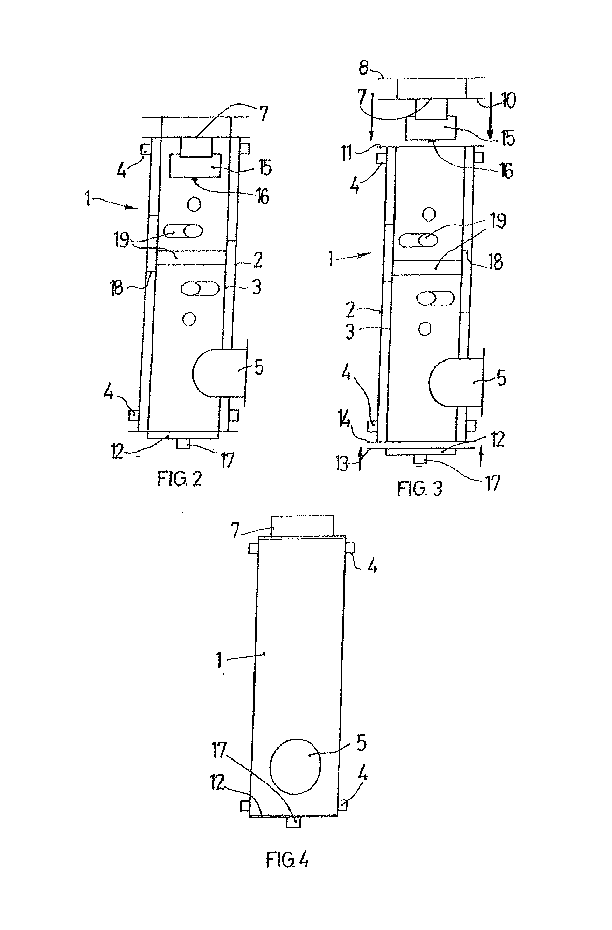

- fig. 2: is a cross-sectional elevational diagram, on a smaller scale, of the completely assembled exchanger;
- fig. 3: is a schematic view, also cross-sectional, corresponding to the preceding figure, showing the upper and lower parts of the exchanger separated from the body;
- fig. 4: is a schematic and non cross-sectional view of the assembled exchanger;
- fig.5: is a general perspective view of the variant of practical embodiment of the exchanger directly installed in a span of chimney;
- fig. 6: is a schematic and cross-sectional view corresponding to the preceding figure.
- fig. 7: is a schematic and partially cross-sectional view of the heat exchanger, according to figure 2, but provided with a second outer lining; and
- fig.8: finally, is a diagram of the system corresponding to the exchanger with a second lining, according to figure 7.

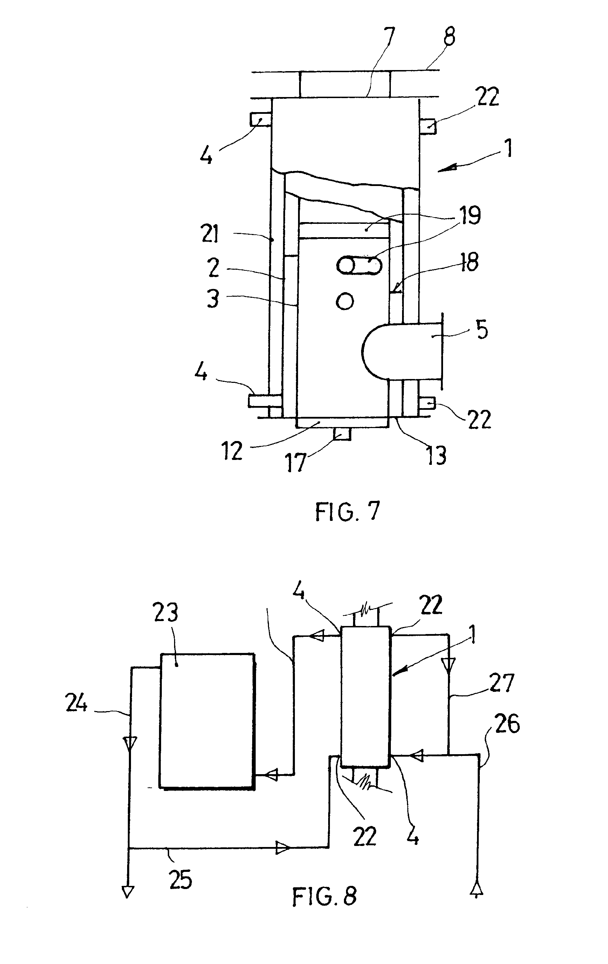

According to these drawings, the body (1) of the exchanger is formed by the outer lining (2) and the inner lining (3), forming a completely watertight space, wherein the water inlet and outlet tubes (4) make contact, situated on the upper and lower parts of the body, and the fumes inlet (5), which can be coupled to the chimney (6) coming from the boiler (represented schematically in figure 8). The inner lining (3) is preferably of a slightly tapered shape, with its base of greater diameter.

The upper part of the body (1) of the exchanger is closed by the non-return draught diverter (7), provided with an upper projection (8) to splice with the definitive exhaust chimney (9) and a lower, peripherally circular projection (10), which, situated on the projection (11), also with circular perimeter, of the upper edge of the body (1) and completely coinciding, permits closure by means of connecting clamps (not represented in the drawings). The use of the connecting clamps permits the coupling and decoupling operations to be carried out quickly and safely, while at the same time eliminating other types of accessories which are susceptible to deterioration due to oxidization or other similar causes.

The lower part of the body (1) is closed by the condensate drainage tray (12), provided with the circular peripheral projection (13) which lines up with the circular peripheral projection (14) of the lower edge of the body (1), which permits the closure also by means of easily and quickly applicable elastic flanges.

The non-return draught diverter (7) has an oval-shaped compartment (15) on its lower face to collect the condensates coming from the chimney (9), said compartment provided with a drain (16) for evacuating the condensates.

The condensate drainage tray (12) has a drainage hose (17) in its central area for evacuating said condensates.

The preferably "half-moon" shaped horizontal dividers (18) are located inside of the space demarcated by the linings (2) and (3) which cause the serpentine path of the water circulating through said space. Likewise, a series of cylindrical tubes (19) are situated inside of the body (1), arranged transversally in diametric direction, connecting the inner lining (3) at different opposing points and permitting the passage of water from one area to another area of the watertight space situated between the linings (2) and (3), increasing the surface area with the heat emitting source, the fumes which circulate through the inside of the body (1) at high temperature.

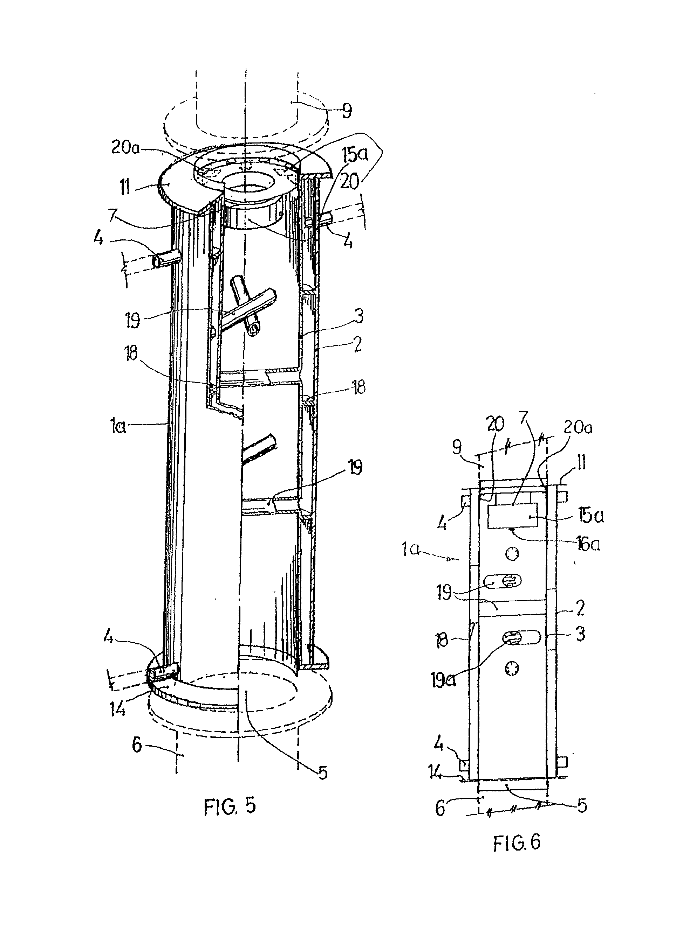

The transversal cylindrical tubes (19) shall optionally have a series of flaps (19a) in their interior, solely represented in fig. 6, which increase the heat exchange surface area.

In the variant of embodiment in which the exchanger is directly installed in a span of exhaust chimney, between the inlet (6) and the outlet (9), the entire outer, lateral surface of the body (1 a) of the exchanger is smooth, corresponding to the outer lining (2), also featuring as a variant the location of the non-return draught diverter made up of an oval-shaped compartment (15a) for collecting condensates, with its drain (16a) inside the body, and on its lower part, fastened by joining means, preferably by several L-shaped lateral supports (20), to guarantee that it is held in place, and flexible fastening staples (20a) on its upper part to fit the non-return draught diverter and prevent it from moving upwards.

In the variant of embodiment in which the exchanger is provided with a second lining, this second lining (21) wraps around the outer lining (2), forming a watertight chamber, with water inlet and outlet for the hoses (22), situated on the upper and lower parts of the lining, while the water inlet and outlet hoses (4) that connect the space between the inner lining (3) and the outer lining (2) appear towards the exterior, passing through the second lining (21).

The implementation of the heat exchanger by means of the second lining (21) requires a complementary water path circuit, according to figure 8.

The hot water produced in the boiler (23) is conducted through the duct (24) towards the place of where it is used. Part of it runs through the auxiliary duct (25) until entering the space of the exchanger (1) through the hose (22), between the two linings (2) and (21). This water, being at a high temperature, causes the heating of the water that runs between the inner lining (3) and the outer lining (2), coming from the hot water usage area through the hose (4) and the duct (26).

The hot water circulating between the outer lining (2) and the second lining (21) is expelled by the hose (22), being conducted by the auxiliary duct (27) towards the duct (26) for the introduction thereof in the exchanger (1) and to proceed with its preheating.

The object of the present invention having been sufficiently described, it must be mentioned that any variation in dimensions, shapes and aspect of the components of the heat exchanger, shall not alter in any way the essentiality of the invention, which is summarized in the following claims.

## Claims

1. Heat exchanger, which can be adapted to thermal boiler exhausts, consisting of a cylindrical body (1) with a double concentric lining (2) and (3), a series of cylindrical tubes (19), situated transversally in diametric direction connecting the inner lining (3) at various opposing points, a number of inlet and outlet water hoses (4) and the fumes inlet (5) **characterized in that** it further comprises a non-return draught diverter (7) in the upper part thereof.

2. Heat exchanger, according to the preceding claim, **characterized in t**hat a drain (16) is provided on the lower face of the non-return draught diverter (7).

3. Heat exchanger, according to claim 1, **characterized in that** inside the watertight space demarcated by the circumscribed outer (2) and inner (3) linings are preferably "half-moon" shaped obstacles (18).

4. Heat exchanger, according to claims 1 and 3, **characterized in that** several flaps (19a) are situated inside the cylindrical tubes (19) to increase the heat exchange surface area.

5. Heat exchanger, according to claims 1 and 3, **characterized in that** the double lining (2) and (3) is slightly tapered, with a greater diameter at the base thereof.

6. Heat exchanger, according to claim 2, **characterized in that** the non-return draught diverter (7) has a circular peripheral projection (10) at its base, of identical dimensions to the circular peripheral projection (11) at the upper base of the body (1).

7. Heat exchanger, according to claims 1, 2 and 6, **characterized in that** the non-return draught diverter (7) is fixed inside the heat exchanger preferably by means of lateral supports.

8. Heat exchanger, according to any of the preceding claims, **characterized in that** the fumes inlet (5) is on the side and **in that** it features a condensate drainage tray (12) at the base thereof with a drainage hose in its center.

9. Heat exchanger, according to any of the preceding claims, **characterized in that** the fumes inlet (5) is vertical.

10. Heat exchanger, according to any of the preceding claims, **characterized in that** it shall optionally have a second outer lining (21) which wraps around the outer lining (2) and consists of a watertight chamber where hot water coming from the boiler (23) through the auxiliary duct (24) shall penetrate, exiting the auxiliary duct (27) to be introduced into the exchanger.
